# EUROPEAN PATENT APPLICATION

(11) **EP 4 030 329 A1**
(43) Date of publication of application: **20.07.2022**
(21) Application number: 21152422.8
(22) Date of filing: 19.01.2021
(51) Int. Cl.: G06F 21/64

(54) **A BLOCKCHAIN TRANSACTION GENERATION MODULE**

(71) Applicant: Taurus Group SA, 1204 Genève GE (CH)
(72) Inventor: Aumasson, Jean-Philippe, 1012 Lausanne (CH); Bonvin, Nicolas, 3971 Chermignon (CH); Brahimi, Lamine, 1006 Lausanne (CH); Majeri, Chervine, 1110 Morges (CH)
(74) Representative: Odoom, Ernest

(57) **Abstract**

The present disclosure relates to a system and a method for generating blockchain transactions. A system is described which allows for a flexible yet secure way for having a set of customisable conditions for validating the blockchain transactions before they are submitted to the blockchain network. The customisable conditions may be in addition to the blockchain rules encoded into the blockchain software or they may replace of modify one or more of the blockchain rules. The systems and methods disclosed herein are suitable for use in both stateful and stateless blockchain systems. Security levels are maintained in blockchains in which embodiments disclosed herein are deployed by providing for a plurality of authorised approver entities to propose transaction requests by consensus. Furthermore, the power to add to, modify or otherwise replace blockchain rules may be distributed among a plurality of authorised administrator entities which are independent from the approver entities and which define one or more sets of validation conditions for validating the generated transactions before broadcasting them to the blockchain network.

## Description

### TECHNICAL DOMAIN

The inventive concepts described herein relate generally to the field of computer technology, and in particular, to a system and a method for creating transaction data to be used for adding a blockchain transaction to a blockchain electronic ledger distributed over a computer-based blockchain network.

### BACKGROUND

Blockchain technology is a technology in which a database, distributed over multiple computers or systems owned by different parties, may be managed by a plurality of entities in a decentralised fashion using cryptographic techniques to make it unfeasibly difficult for a party to tamper with the database. A blockchain can be said to be a consensus-based, electronic ledger of data records, which is implemented in a decentralised manner, as a distributed electronic database shared across an electronic communications network comprising a plurality of blockchain nodes. A blockchain node may be a computer system for example. The plurality of nodes are generally operated by multiple different parties. Nodes may add data records to the blockchain by coming to a consensus based on a set of pre-agreed blockchain rules. Each newly-added data record is cryptographically linked to the preceding data records. The network formed by the nodes is generally known as a blockchain network.

The data records are usually collected into blocks. A block may include a plurality of data records and possibly other information. Blocks are added to the blockchain according to the blockchain rules and are cryptographically linked to preceding blocks in a way in which each block's validity and accuracy are verifiable. Every data record in the blockchain is shared among a plurality of nodes over the communications network, each node verifying that the database is accurate, thus preventing unauthorised data records from being added or existing records from being altered. Once a data record is committed to a blockchain that data record becomes permanent and it is nearly impossible to manipulate or otherwise hack.

Blockchain technology therefore provides a convenient means for providing a fast, cheap way to share critical and/or confidential business data or personal information without the involvement of a third-party middleman or any other trusted agents. Blockchain technology creates an indisputable digital trail of events, allowing for the trail to be audited with confidence. Using blockchain technology, business decisions can therefore be based on accurate, reliable data because it provides access to a verifiable digital record of events carried out during the business.

Blockchains may be used to track digital assets. Well-known blockchains include those which are used for cryptocurrencies. In this type of use of blockchains, the data records may represent financial transactions between parties. For example, a data record may document a financial transaction where a party A transfers a certain amount of digital assets, usually representative of a sum of money in financial terms, to a party B. Data records in a blockchain are referred to as blockchain transactions or simply transactions. A transaction in a blockchain for cryptocurrencies represents a financial transaction in a business environment, involving one or more accounts owned by one or more parties and one or more digital assets.

Other applications where blockchains may be used include the management of smart contracts, with the blockchain being used to manage the performance or execution of certain transactions expressed in the contract. Smart contracts may include code to be executed when certain conditions are met and results may be recorded in the blockchain. Other blockchains may be used for real-time tracking of goods as they move and change hands throughout the supply chain, or for managing a manufacturing process flow, where a transaction may be the completion of a process step, for example. For example, in an Internet of Things system, comprising a plurality of different sensors including temperature sensors and humidity sensors to measure and log temperature and humidity levels of a shipment of crude oil at different times throughout the delivery of the shipment, a blockchain could be used to ensure that the measured parameters fulfill certain requirements laid out in a smart contract.

In more general terms, a blockchain transaction may be described as a data structure that encodes a record of an event. A blockchain transaction may document a real-world event such as a financial transaction, a process step, a task, a fulfillment of all or part of a given contract, for example.

As mentioned above, a transaction may only be legitimately added to a blockchain if it complies with certain blockchain rules. Blockchain transactions therefore require to be validated before they can be added to the blockchain. Blockchain nodes running the blockchain software are responsible for validating transactions for their addition to the blockchain. The validation is subject, at least in part, to the transaction complying with the blockchain rules defined in the blockchain software. Another part of the validation process includes ensuring that the transaction has been electronically signed by a party, or parties, which are authorised to issue transactions, using a cryptographic key issued to those parties.

Cryptographic keys used for signing transactions are usually of an asymmetric type, where a private key of a cryptographically-related pair of private and public cryptographic keys is used to sign the transaction. The private key is known by, or is otherwise accessible to, the party signing the transaction (the owner) and is kept secret, while the corresponding public key may be freely distributed to any party who needs to check the authenticity of the transaction. The private key does not allow for the owner to be traced. Through the use of such asymmetric key cryptographic techniques, a party who possesses assets can send them to a particular recipient, while keeping the sender and the recipient anonymous.

The blockchain rules may define which party, or parties, are authorised to issue blockchain transactions, i.e. which party's signature, or which parties' signatures must be present for the transaction to be considered as valid. Private keys are issued only to the authorised parties, usually by a key issuing authority. The authorised parties may store their private keys locally or may locally store a seed from which the private key may be derived. The issuing authority may also store the private keys or seeds from which the private keys may be derived. Private keys and/or seeds are preferably stored in a secure memory.

In order for a blockchain to function properly, each transaction may be required to adhere to one or more blockchain rules for validating transactions for their addition to a block, usually defined in the blockchain software. The blockchain rules may be set forth initially and only changed through consensus mechanisms. A well-known example of a blockchain is a cryptocurrency blockchain, operated according to the "Bitcoin" protocol. In the Bitcoin protocol, users create and submit transactions. A peer-to-peer network of nodes relay the transactions, often after validating the transactions. Entities compete to construct the next block in the blockchain by checking the transaction for its validity. Valid transactions are added to the blockchain. Nodes which are successful in adding a block may be entitled to a so-called block reward. A successful node may use the network to publish the block to all the other nodes. The node may validate the block before relaying it. The other nodes may validate the block before accepting it and adding it to their versions of the blockchain.

During the lifetime of operation of a blockchain, it may become necessary to update the blockchain rules. But, for most blockchains, this can only happen upon consensus, and the consensus may be difficult to achieve. When consensus is achieved, the blockchain software in all of the nodes participating in the blockchain network needs to be updated to reflect the new or updated blockchain rules. Due to the high security nature of blockchains, any modification to blockchain software usually involves a complicated procedure involving obtaining authorisation of parties responsible for the security of the blockchain and generally including some kind of qualification or certification process. Such processes can be unwieldy, meaning that making any changes to blockchain rules can be prohibitively onerous.

Examples of blockchain rules defined in the blockchain software for a cryptocurrency blockchain for managing cryptocurrency assets based on the unspent output transaction (UTXO) model, such as Bitcoin, include: transaction inputs may only spend cryptoassets which have not already been spent; the sum of transaction outputs must be less than or equal to the sum of transaction inputs, with any unspent cryptoassets representing a fee to the node which successfully added the block to the blockchain; the transaction must prove, via a script, that it is authorised to spend the inputs, usually via an electronic signature; transaction amounts must be expressed with no more than 8 decimal places; the total block size may not exceed 1 MB; among other rules.

It may take weeks before a consensus among stakeholders is reached for changing blockchain rules in a blockchain network. Depending on where the blockchain is used, the high level of difficulty for the blockchain rules to be altered may be considered a feature that is appreciated by the users of the blockchain. The users may use the blockchain with the expectation that the blockchain rules will not shift without the approval of a large supermajority of entities. However, there are many cases where it is desirable to be able to change some blockchain rules in an easier manner to be able to address rapidly changing market conditions, for example.

United States Patent Publication number 10,417,217 B2 describes a solution for allowing efficient updating of blockchain rules while maintaining trust among the entities operating the nodes on the blockchain. The solution allows for blockchain rule changes to be reliably synchronised such that an authority or authorities authorised to make rule changes may do so without requiring the blockchain nodes to make updates to their blockchain software. Instead of having the nodes update their blockchain software, the blockchain itself is used to synchronise the rule changes affecting it. Since the rule changes are integrated into the blockchain itself, this allows for a retroactive audit to be carried out to ensure that all transactions in all blocks comply with all rules valid at the time the transactions were added to the blockchain. Examples of rule changes which may be accommodated include maximum block size, frequency at which blocks can be added, transaction fees, blacklists, whitelists, among others. Although this solution provides for a posteriori auditing of rule changes because the rule changes form part of the block chain data, it presents some drawbacks. In such a system, for example, it is possible for a single entity to dictate a rule change. The above solution therefore presents at least one disadvantage in that too much power may be wielded by a single entity. According to the above solution, a single entity may change the operation of the blockchain itself, essentially allowing that entity to change the rules defining whether a transaction is valid or not, without consensus from other entities in the blockchain network, thereby potentially damaging the security of the blockchain itself.

In view of the state of the art, there is a need to provide for a certain amount of flexibility, to individual entities in a blockchain network, over determining whether a transaction should be issued or otherwise broadcast to the rest of the blockchain network for potential inclusion of the transaction into the blockchain. This flexibility may be required over and above, and independently of, the blockchain rules set by the blockchain software. While such flexibility is a desirable feature, it is also preferrable that high levels of security afforded by blockchains be nonetheless maintained.

### BRIEF SUMMARY OF THE INVENTION

The present disclosure relates to a system and a method for generating blockchain transactions. A system is described which allows for a flexible yet secure way for having a set of customisable conditions for validating the blockchain transactions before they are submitted to the blockchain network. The customisable conditions may be in addition to the blockchain rules encoded into the blockchain software or they may replace of modify one or more of the blockchain rules. According to embodiments of the present invention, these customisable conditions may include syntactical or logical rules related to the content of the transactions and how the content is formatted. The rules will therefore depend on the application and on the working context in which the transaction is processed. The systems and methods disclosed herein are suitable for use in both stateful and stateless blockchain systems. Security levels are maintained in blockchains in which embodiments disclosed herein are deployed, by providing for a plurality of authorised approver entities to propose transaction requests by consensus. Furthermore, the power to add to, modify or otherwise replace blockchain rules may be distributed among a plurality of authorised administrator entities which are independent from the approver entities and which define one or more sets of validation conditions for validating the generated transactions before broadcasting them to the blockchain network.

A blockchain transaction is a piece of data having a format which is defined by whichever blockchain platform for which the transaction is intended. It is created so as to be processed by the blockchain network. A blockchain transaction typically includes one or more digital signatures, applied to all or part of the fields constituting the transaction. In the context of the present disclosure, a blockchain transaction is created by a processing system of a blockchain transaction generation module after having received an approved transaction request, verifying the approved transaction request against a set of validation conditions, and calculating one or more digital signatures. A blockchain transaction generation module, or blockchain transaction generator, is a hardware block including a processor for running computer-readable code, configured to receive requests to generate blockchain transactions, among others, and to generate blockchain transactions therefrom.

According to a first aspect, provision is made for a transaction generation module configured to generate at least one blockchain transaction for broadcasting to a blockchain network for inclusion into a blockchain, the transaction generation module comprising:
a server system; and
at least one processing system having access to at least one memory device;
the server system being configured to:
relay one or more approved transaction requests to the processing system, the approved transaction request being a first type of data message comprising source data and/or metadata from which the blockchain transaction may be generated;
the processing system being configured to:
generate the blockchain transaction based on the approved transaction request; and
electronically sign the blockchain transaction using all or part of a system cryptographic key pertaining to the processing system or to the transaction generation module;
characterised in that:
the server system is further configured to relay a received validation policy to the processing system, the validation policy being a second type of data message comprising one or more sets of validation conditions, the validation policy being electronically signed using a plurality of administrator private keys of a corresponding plurality of cryptographically-related pairs of private and public cryptographic keys, each of the plurality of administrator private keys pertaining to a different one from a plurality of administrator computing systems; and
the processing system is further configured to:
   authenticate the validation policy using a plurality of administrator public keys stored in the memory device, said plurality of administrator public keys corresponding to the plurality of administrator private keys;
   evaluate the approved transaction request with respect to at least one of the sets of validation conditions; and
   prevent said generation of the blockchain transaction unless the validation policy is positively authenticated and the approved transaction request meets the validation conditions.

According to a second aspect, a system is disclosed for generating at least one blockchain transaction for broadcasting to a blockchain network for inclusion into a blockchain, the system comprising:
a transaction generation module as described above; and
a plurality of administrator computing systems each having access to a hardware authentication device or a software authentication application for storing the corresponding administrator private key and for creating electronic signatures using the corresponding administrator private key;
wherein the administrator computing systems are configured to cooperate with one another to provide the validation policy to the transaction generation module.

According to a third aspect, there is provided a system for generating at least one blockchain transaction for broadcasting to a blockchain network for inclusion into a blockchain, the system comprising:
a transaction generation module as described in the paragraph above;
a plurality of administrator computing systems each having access to a hardware authentication device or a software authentication application for storing the corresponding administrator private key and for creating electronic signatures using the corresponding administrator private key; and
a plurality of approver computing systems each having access to a hardware authentication device or a software authentication application for storing the corresponding approver private key and for creating electronic signatures using the corresponding approver private key;
wherein the administrator computing systems are configured to cooperate with one another to provide the validation policy to at least one of the approver computing systems and the approver computing systems are configured to cooperate with one another to provide the approved transaction requests to the transaction generation module.

According to a fourth aspect, a blockchain network is disclosed, the network comprising either of the systems described above.

According to a fifth aspect, provision is made for a computer-implemented method for generating a blockchain transaction for broadcasting to a blockchain network for inclusion into a blockchain, the method comprising:
authenticating, using a processing system, a received validation policy, the received validation policy comprising at least one set of validation conditions, said authentication using a plurality of administrator private keys of a corresponding plurality of cryptographically-related pairs of private and public cryptographic keys, each of the plurality of administrator private keys pertaining to a different one from a plurality of administrator computing systems;
receiving an approved transaction request, the approved transaction request being a first type of data message comprising source data and/or metadata from which the blockchain transaction may be generated;
generating, by the processing system, the blockchain transaction based on the approved transaction request if all or part of the approved transaction request fulfills at least one of the sets of validation conditions according to the validation policy;
preventing, using the processing system, said generation of the blockchain transaction unless the received validation policy is positively authenticated; and
electronically signing, by the processing system, the blockchain transaction using all or part of a cryptographic key pertaining to the processing system or to the transaction generation module.

According to a sixth aspect, one or more non-transitory computer-readable media is presented, having stored thereon computer executable instructions which, when executed by one or more computing systems, cause the computing systems to perform the method described above.

### BRIEF DESCRIPTION OF THE DRAWINGS

The inventive concepts described herein will be better understood thanks to the detailed description which follows and the accompanying drawings, which are given as non-limiting examples of embodiments of the inventive concepts, namely:
Figure 1, illustrating a blockchain network in which an embodiment of the present invention may be deployed;
Figure 2, illustrating a schematic representation of a system for generating a blockchain transaction according to an embodiment described herein;
Figure 3, illustrating a schematic representation of a system for generating a blockchain transaction according to another embodiment described herein;
Figure 4, showing a block diagram of a blockchain transaction generation module according to an embodiment described herein; and
Figure 5, showing a block diagram of a blockchain transaction generation module according to another embodiment described herein.

### DETAILED DESCRIPTION

Although the present disclosure may refer to blockchains from the cryptocurrency field when illustrating certain examples of the innovative concepts being discussed, it will be clear to a person skilled in the art that the concepts are equally applicable to blockchains supporting applications other than cryptocurrencies, for example via smart contract, such as tokenised assets, process tracking, supply chain management, Internet of Things, and the like.

Embodiments disclosed herein may find particular use in blockchain systems in which it is desirable to allow for a party in a blockchain network to have a certain amount of flexibility in validating transactions for broadcast to the rest of the parties in the network. For example, the modification of certain blockchain rules, or for the addition of certain custom rules for determining whether a transaction is valid, thereby allowing for its inclusion in a particular blockchain.

In a blockchain environment, legitimate updates to blockchain rules may become necessary from time to time for example to fix bugs, or to implement protocol changes to account for possible evolution of the network protocol for example. Once blockchain rules have been implemented, by updating the blockchain software in all of the nodes, then blockchain nodes which perform validation of submitted transactions will validate the transactions against the updated rules.

However, there are other cases where an entity, or organisation, may want to have flexibility in deciding which transactions are valid according to his or her organisation, even before they are submitted to the blockchain network. Embodiments described herein allow for an entity to enforce custom rules for submitting transactions to a blockchain network. In some embodiments, a blockchain transaction generation module is disclosed, where transactions are validated against a customised validation policy before the generated transactions are submitted to the blockchain network. Such blockchain transaction generation modules may be deployed within a node of a blockchain network which issues transactions.

In the case where the entity or organisation is a bank, which manages clients' cryptocurrency assets using blockchain technology, for example, the bank may want to implement new policies for strengthening security in relation to its business. For example, the bank may decide to implement a new policy for ensuring compliance with certain security procedures with which it is required to comply. The new policy may require that certain transactions receive the consent of multiple parties before they can be validated for submission to the blockchain as a valid transaction. Such consent may be given by the multiple parties jointly performing a number of operations in order to issue an electronic signature, effectively resulting in shared control over certain private cryptographic keys. Embodiments described herein allow for blockchain transactions to be generated while enforcing compliance with such additional validation conditions. It is also possible to easily accommodate for any modifications to the conditions should there be a change in security policy for example. Other examples of customisable conditions which may be implemented for validating the transactions before broadcasting them to the network include conditions to filter the transactions by limiting the amounts of cryptocurrency assets which may be transferred during one transaction, conditions for the enforcement of blacklists or whitelists of addresses, conditions to filter transactions depending on the time of day, conditions to enforce sanity checks on certain parameters of the transaction, conditions to define the number of authorised approvers required to validate a transaction, conditions to restrict the length of time the approver's or the approvers' rights remain valid, among others. Policies which require enforcement of such conditions may be put in place to prevent fraud, enforce anti-money laundering policies, minimise financial risk, restrict or otherwise revoke certain entities' signing rights and so on. Approvers are designated entities, users or systems within an organisation who are authorised to provide their approval for transaction requests to be passed to the transaction generation module for processing and for potentially providing a blockchain transaction. Approvers may also initiate a transaction request. The role of approvers will be further discussed below.

A transaction request, according to embodiments described herein, is a piece of data that encodes the description of one or more blockchain transactions, with a blockchain transaction representing, for example, the transfer of a given cryptocurrency amount from a given sender address to a given recipient address, or the execution of some smart contract functionality. A transaction request does not necessarily have to follow the syntax used by the blockchain platform for which it is intended, but may simply use part of its semantics to express an operation that will ultimately become part of the blockchain's ledger. A transaction request, according to an embodiment, may be encoded as a serialised representation of a number of different fields, where the serialisation mechanism is for example Protocol Buffers. Fields with a transaction request may include, for example: the type of crypto-asset being managed (for example, Bitcoin); the sender address or equivalent information such as a seed identifier and path as established by the BIP44 syntax; the receiver address; an amount or quantity of the crypto-asset to be transferred; information specific to the blockchain platform being used (for example Ethereum smart contract address in the case of ERC-20 tokens, and Ethereum gas limit); signatures of the approvers.

Embodiments described herein allow for blockchain transactions to be validated based on new, amended or alternative sets of validation conditions independently of the validation dictated by the blockchain software and performed by other nodes on the network seeking to add new transactions to the blockchain.

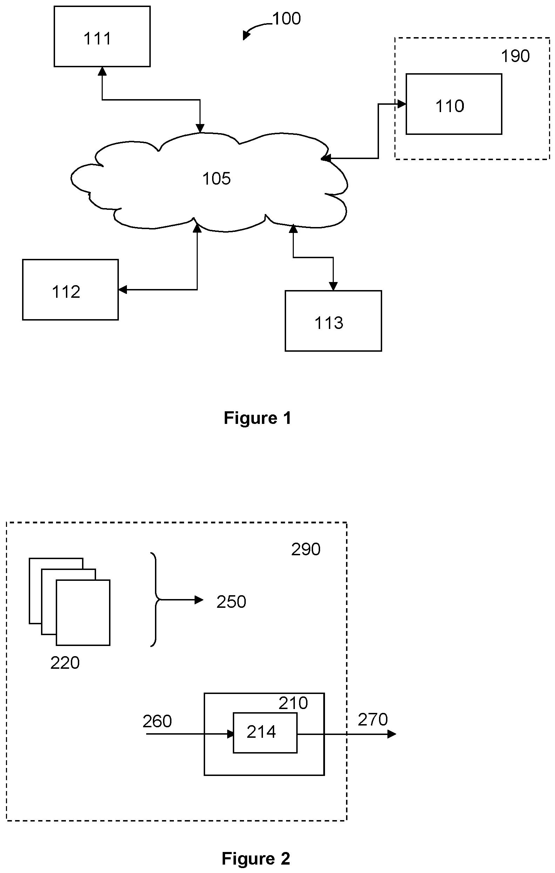

Figure 1 illustrates a blockchain network within which an embodiment of the present invention may be deployed. The blockchain network 100 comprises a communications network 105 and blockchain nodes 110, 111, 112 and 113, connected in a peer-to-peer configuration via the network 105. In this example, node 110 is a node in which an embodiment of the present invention is deployed. In this example, node 110 is operated by organisation 190 and is configured to generate blockchain transactions according to an embodiment of the invention and to broadcast them via the network 105 to the rest of the nodes 111, 112, 113.

Figure 2 shows a node 210 according to an embodiment of the present invention in its operating environment within the organisation 290. The organisation 290 defines certain policies for the way it carries out its operations, including the way in which the organisation deals with transactions for the blockchain. The organisation may therefore have a validation policy 250 comprising a set of conditions which must be met for blockchain transactions to be validated and subsequently electronically signed for broadcasting to the blockchain network. The validation policy is a piece of data, or a data message, which encodes a set of conditions defining criteria which need to be met whenever the organisation issues a blockchain transaction. Such criteria may be set by the organisation in order to prevent fraud, or to minimise financial risk, or to ensure that anti-money laundering policies are met, or to define how approval of transaction requests is to be given and by whom, for example. The validation policy is set by a plurality of administrators 220 of the organisation 290. Node 210 is a node, or computing system, comprising communications circuitry, memory, processors and a blockchain transaction generation module 214 according to an embodiment of the invention.

The transaction generation module 214 receives an approved transaction request 260, which is a piece of data comprising information from which one or more blockchain transactions may be generated. For example, for a blockchain used for cryptocurrency management, the transaction request may comprise a sender account, a receiver account and an amount of cryptocurrency to be transferred from the sender account to the receiver account. By approved transaction request it is meant a transaction request which has been electronically signed by one or more designated authorised signatories within the organisation to show that the transaction has received the necessary approval. According to the embodiment, the transaction generation module verifies whether the transaction request 260 satisfies the validation conditions specified in the validation policy 250, which preferably includes verifying that the transaction request has the correct approval, and verifying whether all of the validation conditions are met. The transaction generation module generates the blockchain transaction 270 if the validation conditions are met.

Administrators 220 are computing systems, entities or persons within the organisation who define the validation policy which the organisation follows for issuing transactions. The validation policy may change from time to time. One way to enforce a validation policy would be to encode the policy into the blockchain software, however this would require software changes to all nodes in the blockchain network whenever the policy changes, which is too difficult to implement. Modifying blockchain software is also considered to present a security risk and so the process for doing so is intentionally rendered difficult. According to embodiments of the present invention, when processing approved transaction requests 260, the transaction generation module 210 enforces the validation policy 250 defined by the administrators 220 using secure computing techniques within a processing system of the transaction generation module 214.

To show their agreement with the organisation's validation conditions, administrators endorse a set of validation conditions by electronically signing the validation policy in which the validation conditions are specified. A validation policy may have a plurality of different sets of validation conditions for different blockchains or for different types of asset handled by a transaction, for example. Signatures may be provided using a private key of a public-private cryptographic key pair attributed to the particular administrator. Preferably, a subset of the plurality of administrators are required to sign the validation policy, following a predetermined quorum. Thus, administrators may jointly create a validation policy following a quorum model, whereby only a subset of the approvers is required to create a validation policy. For example, in a 2-of-3 model, there would be 3 administrators, and the signature of 2 distinct administrators from these 3 would be sufficient to create a validation policy accepted as valid by the processing system. By requiring that the validation policy be electronically signed by a plurality of administrators, assurance is provided that no single person or entity can randomly change the organisation's validation policy for unscrupulous reasons. Administrators mark their approval of a validation policy by applying a digital signature, and therefore each distinct administrator controls a distinct private key. The transaction generation module enforces the rule that a plurality of administrators, preferably according to a predefined quorum of administrators, by means which will be further described below.

A validation policy defines one or more sets of validation conditions, encoded following an ad hoc syntax, and typically may include the following types of filters: authorized number of approvers; details regarding approvers' rights; the assets which will be affected; the time of day etc.; the period over which an approver's rights remain valid; authorised transaction details, such as amount, whitelist, blacklist, time of day, etc.

According to an embodiment, the approved transaction request is provided by a request initiator within the organisation. The request initiator may be an entity or a user within the organisation, having a computing system for issuing the transaction request 260. The request initiator, being from within the organisation, is aware of the validation policy set be the administrators. The request initiator is authorised to issue transaction requests in that it has access to a cryptographic key for electronically signing the transaction request indicating its approval of the transaction request. Preferably, the cryptographic key is a private key of a private-public key pair, according to an asymmetric cryptographic protocol. Known cryptographic algorithms are available for generating such private-public key pairs. The private key, which is kept secret, is used to generate a digital signature for a message, and such a signature can be verified by using the corresponding public key, which can be openly distributed without compromising security. A digital signature performed on a message using such a private key provides for message authentication (in that the receiver can verify the origin of the message), message integrity (in that the receiver can verify that the message has not been modified since it was signed) and non-repudiation of the message (in that the sender cannot falsely claim that they have not signed the message). Several cryptographic algorithms are known which meet these criteria. In a particularly advantageous embodiment of the present invention, a variant of a known digital signature algorithm which uses elliptic curve cryptography, known as the Elliptic Curve Digital Signature Algorithm (ECDSA), is preferred because of its speed advantage and the relatively small length of private key required.

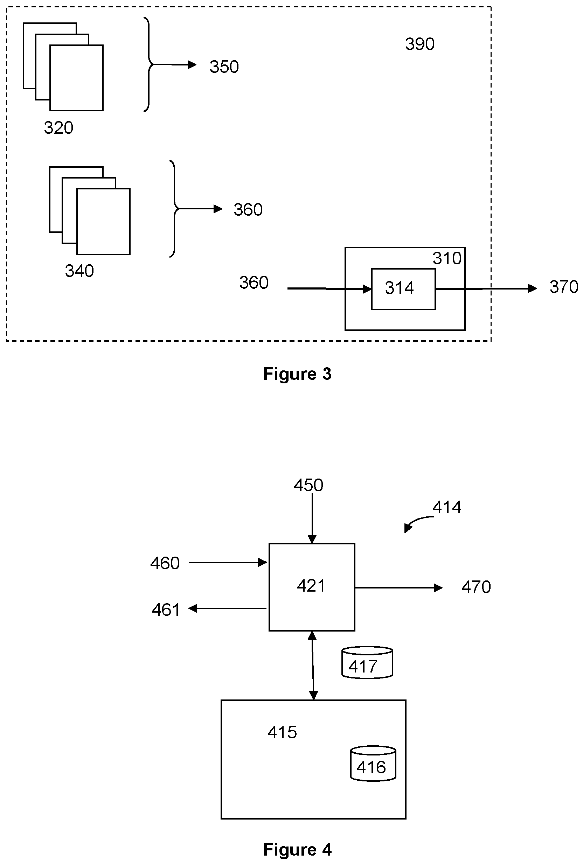

Figure 3 shows a node 310 in its operating environment within the organisation 390. In order to add more security, according to a preferable embodiment, a single initiator is not allowed to propose a transaction request on its own. Instead, the organisation designates a plurality of entities (users or computing systems), including the initiator, as approvers 340. The approvers, being from inside the organisation, are all aware of the validation policy and they work together, in consensus fashion, to provide an approved transaction request 360, by jointly providing their electronic signatures to transaction requests initiated by one of them and which meet their approval.

As illustrated in Figure 3, the organisation's validation policy 350 is defined jointly by a plurality of administrators 320. The approvers 340 are able to mark their approval of a transaction request. Preferably, the approvers 340 jointly create the approved transaction request 360. One approver may initiate the process by issuing a proposed transaction request. The remaining approvers from the plurality of approvers 340 may then be alerted that a proposed transaction request has been issued. The approvers then come to a consensus as to whether the proposed transaction request meets the organisation's validation policy 350 in that it satisfies the validation conditions. If the proposed transaction request meets the validation conditions, then the approvers jointly sign the proposed transaction request to give the approved transaction request 360. Preferably, a subset of the plurality of approvers are required to sign the proposed transaction request, following a predetermined quorum, for example two out of three approvers may be required to sign the proposed transaction request for it to be accepted as an approved transaction request. The blockchain transaction generation module 314 then enforces the validation policy 350 by generating and signing the blockchain transaction only if the approved transaction request complies with the validation conditions set out in the validation policy.

To summarise the process for generating blockchain transactions satisfying the organisation's validation policy as it evolves, according to embodiments, a plurality of designated authorised administrators work together to come to a consensus to provide an electronically signed validation policy. Thus, the plurality of administrators can be said to cooperate with one another to provide the validation policy to the transaction generation module or to the approver computing systems. Administrators, in the sense of the invention, are usually users within the organisation who have administrative credentials and who each use their administrator computing systems, via an appropriate input interface, to indicate their agreement with a validation policy. Each administrator's credentials may be stored in a hardware authentication device or a software authentication application to which its administrator computing system has access. A plurality of approvers work together to provide a consensus-based approval on a transaction request initiated by one of them, thereby providing an approved transaction request. Thus, the plurality of approvers can be said to cooperate with one another to provide the approved transaction requests to the transaction generation module. Approvers, in the sense of the invention, are usually users within the organisation who have approver credentials and who each use their approver computing systems, via an appropriate input interface, to indicate their approval of a transaction request. Each approver's credentials may be stored in a hardware authentication device or a software authentication application to which its approver computing system has access. The transaction generation module then processes the approved transaction request, enforcing the organisation's validation policy, and provides a corresponding blockchain transaction should the approved transaction request satisfy all of the conditions in the validation policy. Depending on the embodiment, whether it be an embodiment for a stateless system where the transaction generation module does not store the validation conditions, or a stateful system where the transaction generation module does store the validation policy, the transaction generation module will either receive the validation policy 350 from the administrators 320 or it will receive the validation policy along with the approved transaction request 350 from the administrators 340.

According to an embodiment of the blockchain transaction generation module, a transceiver is provided in the transaction generation module, the transceiver being configured to receive approved transaction requests and to pass them to the server system for dispatch as described above and to receive signed transactions, validated against the validation conditions, and to transmit the signed transactions to the blockchain network for adding to the blockchain after validation according to the blockchain rules defined by the blockchain software. The module may also comprise a storage device and a processor or processing system coupled to the storage device. The storage device may store software instructions for controlling the processor. When executed by the processor, the software instructions may cause the processor to operate as described below.

Figure 4 shows a schematic representation of a blockchain transaction generation module 414 according to an embodiment of the invention. The blockchain generation module 414 forms part of a blockchain node 410 which is not shown. This embodiment is for use in a stateful system, where the validation policy is received from the administrators and stored in a memory of the transaction generation module. The transaction generation module 414 may have a transceiver (not shown) for receiving the validation policy from the administrators and the transaction request from an initiator, or preferably from a plurality of approvers as well as for transmitting the blockchain transaction to the blockchain network. The transaction generation module 414 comprises a processing system 415 having access to one or more memory devices 416. The transaction generation module may have access to a general-purpose memory 417 for storing computer-readable instructions or data from intermediate calculations, for example. The processing system is configured to receive the approved transaction requests and to generate blockchain transactions while enforcing the organisation's validation policy before digitally signing the transactions if they comply with at least one of the sets of validation conditions stipulated in the validation policy. Transactions which do comply are signed and sent for broadcasting to the blockchain network. According to an embodiment, the transaction generation module may comprise a server system 421 for relaying received approved transaction requests to the processing system and for receiving and relaying signed transactions from the processing system to the blockchain network. Some embodiments may comprise a transceiver for interfacing with the blockchain network and for receiving the approved transaction requests. In some embodiments the transceiver module may also receive the validation policy.

As well as having the processing system 415, the transaction generation module 414 may further comprise a server system 421, which is a computerised system that serves to coordinate operations between approvers, administrators and the processing system. For example, after a first approver initiates a transaction process by creating a transaction request proposal, the server system may notify 461 other approvers that there is a pending transaction request proposal and wait to receive an approved transaction request upon which the approvers have reached a consensus, i.e. a transaction request having a plurality of electronic signatures. The server system may forward approved transaction requests to the processing system and then receive the signed transaction back from the processing system to then broadcast the transaction to the blockchain network.

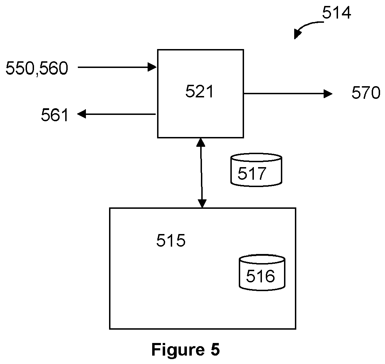

Figure 5 shows a block diagram of a second embodiment of a blockchain transaction generation module 514 of the invention. This embodiment is for use in a stateless system, which is configured to receive the validation policy 550 from the approvers, along with the approved transaction request 560.

A stateless system is one in which the processing system of the transaction generation module has a "fixed state", i.e. a state which does not change over time. A stateless system would therefore not be able to update the validation policies or the validation conditions defined therein. In a stateless system, the method for issuing a blockchain transaction, which will ultimately be validated by the blockchain network, involves setting up the system where the public-private keys are generated and the public keys are loaded into the memory of the processing system and so on; then the following steps are carried out:
1. a plurality of approvers collectively create an approved transaction request, including the signatures of a sufficient number of approvers to satisfy the quorum protocol and including the validation policy with the validation conditions and send it to the processing system of the transaction generation module;
2. the processing system receives the approved transaction request, verifies the validity of the approvers' signatures, verifies that the approved transaction request is valid with respect to the validation conditions; if any of these verifications fail, then the approved transaction request is rejected; otherwise, a blockchain transaction is created based on the information in the approved transaction request. If no validation policy is provided, then the approved transaction request is rejected.
3. the processing system sends the blockchain transaction to the server system, or other component that will ensure that the transaction is reliably sent to the blockchain network.

A stateful system is one in which the processing system has access to a memory that can be used to store validation conditions in such a way that the validation conditions can be updated by the administrators in a reliable manner. In this type of system, the generation of the blockchain transaction differs from the stateless case in that the validation policy is not included in the approved transaction request but is received separately from the administrators. According to embodiments, the processing system may load the validation policy whenever an approved transaction request is received so that whichever validation policy is valid at the time will be loaded into the memory of the processing system. According to an embodiment, the administrators send a special message to the processing system of the transaction generation module to instruct it to update the stored validation policy by loading a new one. This way of updating can be further enhanced, using techniques known in the art, to prevent "anti-replay" and "anti-downgrade" practices, which would otherwise allow an unauthorised party to load a previous version of the validation protocol. To prevent "anti-replay" or "anti-downgrade" attacks in a stateless system, the administrators may either ensure that the approvers no longer have access to the old validation policies, or the administrators could rotate their keys and thus update the administrator public keys in the memory of the processing system.

In both stateless and stateful embodiments of the present invention the validation conditions can be readily modified throughout the life of the system. Multiple parties must collaborate to provide a consensus-based cryptographically signed validation policy, thereby preventing any single party from having all governance rights.

Embodiments described herein enable the approvers to jointly create a blockchain transaction request which will form the basis of a blockchain request while enforcing validation conditions (via rule set objects) where said validation conditions are defined by a plurality of separate parties, the administrators, the conditions being enforced by the processing system, which is a secure processing environment, having access to at least one secure memory device 416, 516. The secure memory device 416, 516 is not directly accessible by the transaction generation module. According to embodiments a general-purpose memory 417, 517 may be provided for holding computer-readable instructions accessible by the transaction generation module or for storing intermediary calculations performed by the transaction generation module, for example. The processing system 415, 515 verifies the validity of the approved transaction request with respect to the validation protocol prior to creating and signing the blockchain transaction should the approved transaction request indeed prove to be valid. According to embodiments, the validation policy may be updated, modified, revoked etc. as required by the operation of the organisation in an efficient yet secure manner because the validation policy is decided jointly by a plurality of designated authorised administrators and the transaction requests are approved by a plurality of designated authorised approvers. The processing system is a secure processing system which provides administrators and approvers with the credentials they require to electronically sign validation policies and transaction requests to indicate their approval and which authenticates the validation policies and transaction requests before testing the requests to ensure they comply with the validation policy before signing and issuing the blockchain transaction.

The processing system, according to embodiments of the invention, is a secure processing system, which may comprise one or more computerised systems configured to create blockchain transactions signed using one or more cryptographic keys, preferably private keys of a public-private key pair of an asymmetric cryptographic protocol. The processing system is further configured to receive approved transaction requests from one or more approvers, and to validate that a given transaction requests fulfill the validation conditions expressed in the validation policy. The processing system is configured to receive new validation policies and to verify that they were created by authorised administrators. The processing system therefore has access to public keys of the approvers and of the administrators, as required to verify the validity of their signatures.

Upon receiving an approved transaction request and verifying that it complies with the validation conditions, the processing system then generates the blockchain transaction using the content of the approved transaction request and calculates its digital signature (or signatures). The processing system may then transfer the blockchain transaction to the server system for transmitting to the blockchain network.

The processing system 415, 515 of embodiments of the present invention is a secure processing system in that it incorporates security features for protecting private cryptographic keys from unauthorised access and for ensuring the proper execution of the computations that it performs. According to one embodiment, the processing system may be a hardware security module (HSM). According to another embodiment, the processing system may be a software system, such as a container or a virtual machine. According to yet another embodiment, the processing system may be a set of subsystems, collectively or redundantly performing the programmed functions, such as a network of machines configured to operate according to one from various multi-party computation (MPC) cryptographic protocols or configured to operate according to one from various threshold signature scheme (TSS) cryptographic protocols, where each of the machines verifies the approved transaction with respect to its compliance with the validation conditions. According to still another embodiment, the processing may be a single hardware security module shared by several instances of the system: that is that is, the HSM has multiple, segregated "slots", where each distinct slot stores a distinct set of approver and administrator public keys, for example in order to serve different organizations with the same device.

The processing system has access to a secure memory in which is stored either the private keys of the administrators and approvers or seeds from which the private keys of the administrators and approvers may be derived. The processing system also has access to the cryptographic key or keys required to sign the blockchain transactions for broadcast to the blockchain network as well as the public keys of the administrators and approvers. The processing system is configured to receive and authenticate the validation policy by verifying the administrators' signatures and to enforce the application of the validation conditions on the approved transaction requests.

Approvers may be systems or persons having access to a system permitting them to mark their approval of a transaction request and/or to initiate transaction requests (transaction request proposals). The approval of a transaction request is done via the calculation of a digital signature over data expressing the transaction to be executed. Approvers typically jointly create a transaction request following a quorum model, whereby only a subset of the approvers is required to create a transaction request. For example, in a 2-of-3 model, there would be 3 approvers, and the signature of 2 distinct approvers from these 3 would be sufficient to create a transaction request. According to embodiments, approvers may be persons or teams using computing systems equipped with hardware tokens for issuing a digital signature when used in combination with an appropriate software application. According to other embodiments, approvers may be software applications, such as virtual machines, each having access to a distinct private cryptographic key for providing signatures.

Loss or theft of a private key may have catastrophic consequences in the domain of blockchain. In order to minimise the risk of theft, private keys or seeds of approvers and administrators are typically stored in some sort of dedicated secure memory, which is usually a part of a secure system including a processor for performing the signatures by the approvers and administrators. Such secure systems are generally a type of trusted execution environment, such as a hardware security module (HSM) or a software security application.

The systems and methods disclosed herein allow for an organisation to enforce its validation policy in a secure way by defining and enforcing validation conditions in a trusted execution environment where the conditions cannot easily be changed. The systems and methods further provide for a certain flexibility since the enforcing rules are defined in a software component such as in a server system. Provision is made for secure modification of the validation conditions since they are enforced in a secure environment. Furthermore, provision is made for cryptographic enforcement of a multi-party approval of the validation policies, thus preventing any single entity from attempting to set what would be unacceptable validation conditions, for example conditions which might circumvent security controls. Organisations are therefore able to securely implement changes to their policies for issuing blockchain transactions without having to change the blockchain software. The validation conditions are set by separate parties to those who approve transactions, and the system is configured to verify that this is the case. The systems and methods are suitable for stateful systems and stateless systems which cannot store the customised validation conditions internally. The system and methods allow for the distribution of the rights for approving the transactions and those for setting the conditions for validating the transactions for generation and broadcast to a blockchain network across different sets of parties, Furthermore, the validation of the authenticity of the approval is done using cryptographic techniques involving the approval and the creation of the validation conditions to be performed by a quorum from distinct sets of parties.

Embodiments of the present invention allow for blockchain transactions to be generated while adding cryptographic validation of transaction requests by one or more parties using either secure hardware or secure software for issuing signed approved transaction requests. An additional layer of security is provided by having the validation conditions generated by a quorum of administrator parties using cryptographic validation using secure hardware or secure software application methods. Although the public keys of the administrators can be said to be hardcoded, the validation conditions do not have to be hardcoded in the processing system but may either be updatable if they are stored in the processing system or transmitted along with the transaction request and not stores in the processing system. The validation conditions are securely enforced in the processing system, which is a trusted execution environment, realised either as a hardware security module or a software security application or some other trusted execution environment. The validation conditions are enforced by the processing system storing the public keys of all the authorised administrators and the number of required signatures from distinct approvers.

Embodiments described herein prevent approvers from colluding to issue transactions which would be contrary to policies dictated by an organisation for issuing blockchain transactions by having a plurality of administrators securely issue a set of validation conditions and having the transaction requests examined against the validation conditions using the calculation of cryptographic signatures within a trusted execution environment. A single administrator cannot unilaterally impose the validation conditions. Instead, a plurality of entrusted administrators must jointly issue a valid validation conditions by cryptographically signing the validation policy in which the validation conditions are defined. Validation conditions defined in a validation policy may be adapted and adjusted depending on the types of approvers and can be easily changed over time by issuing new conditions that will be enforced by the processing system of the transaction generation module. Validation conditions are securely verified within the processing system of the transaction generation module and can be readily revoked if needed.

## Claims

1. A transaction generation module (214, 314, 414, 514) configured to generate at least one blockchain transaction (270, 370, 470, 570) for broadcasting to a blockchain network for inclusion into a blockchain, the transaction generation module comprising:
a server system (421, 521); and
at least one processing system (415, 515) having access to at least one memory device (416, 516);
the server system being configured to:
relay one or more approved transaction requests (260, 360, 460, 560) to the processing system, the approved transaction request being a first type of data message comprising source data and/or metadata from which the blockchain transaction (270, 370, 470, 570) may be generated;
the processing system being configured to:
generate the blockchain transaction based on the approved transaction request; and
electronically sign the blockchain transaction using all or part of a system cryptographic key pertaining to the processing system (415, 515) or to the transaction generation module (214, 314, 414, 514);
**characterised in that**:
the server system (421, 521) is further configured to relay a received validation policy (250, 350, 450, 550) to the processing system (415, 515), the validation policy being a second type of data message comprising one or more sets of validation conditions, the validation policy being electronically signed using a plurality of administrator private keys of a corresponding plurality of cryptographically-related pairs of private and public cryptographic keys, each of the plurality of administrator private keys pertaining to a different one from a plurality of administrator computing systems (220, 320); and
the processing system is further configured to:
authenticate the validation policy using a plurality of administrator public keys stored in the memory device, said plurality of administrator public keys corresponding to the plurality of administrator private keys;
evaluate the approved transaction request with respect to at least one of the sets of validation conditions; and
prevent said generation of the blockchain transaction unless the validation policy is positively authenticated and the approved transaction request meets the validation conditions.

2. The transaction generation module according to claim 1, wherein the processing system is further configured to:
determine whether the plurality of administrator public keys used to authenticate the validation policy correspond to a plurality of administrator computing systems identified according to a predetermined quorum of identifiable administrator computing systems; and
further prevent said generation of the blockchain transaction unless the plurality of administrator public keys correspond to the plurality of administrator computing systems identified according to the predetermined quorum of identifiable administrator computing systems.

3. The transaction generation module according to any of the preceding claims, wherein the approved transaction request is electronically signed using a plurality of approver private keys of a corresponding plurality of cryptographically-related pairs of private and public cryptographic keys, each of the plurality of approver private keys pertaining to a different one from a plurality of approver computing systems (340);
the processing system being further configured to:
authenticate the approved transaction request using a plurality of approver public keys stored in the memory device, said plurality of approver public keys corresponding to the plurality of approver private keys;
determine whether the plurality of approver public keys used to authenticate the approved transaction request correspond to a plurality of approver computing systems identified according to a predetermined quorum of identifiable approver computing systems; and
further prevent said generation of the blockchain transaction unless:
the plurality of approver public keys correspond to the plurality of approver computing systems identified according to the predetermined quorum of identifiable approver computing systems; and
the approved transaction request is positively authenticated.

4. The transaction generation module according to any of the preceding claims, wherein the processing system is a secure processing system for executing cryptographic algorithms, the secure processing system having access to a further memory device, the further memory device being a secure memory device, said system cryptographic key, or a seed from which said system cryptographic key may be derived, being stored in the secure memory device.

5. The transaction generation module according to claim 4, wherein the secure processing system is configured to generate said pairs of cryptographically-related private and public keys and to store at least said private keys, or a plurality of seeds from which said private keys may be generated, in the secure memory device.

6. The transaction generation module according to either of claims 4 or 5, wherein the secure processing system is one of: a hardware security module; a software-implemented system; or a combination of interconnected hardware and/or software subsystems configured to cooperate in said generation of the blockchain transaction using a multi-party computation scheme or a threshold signature scheme.

7. The transaction generation module according to any of claims 3 to 6, wherein the server system is further configured to relay all or part of at least one transaction request proposal received from a first approver computing system among the plurality of approver computing systems to the remaining approver computing systems before relaying said approved transaction request to the processing system, said transaction request proposal being a data message of the first type comprising source data and/or metadata from which the blockchain transaction may be generated.

8. The transaction generation module according to any of the preceding claims, wherein:
the server system is configured to receive the validation policy from at least one of the administrator computing systems; and
the processing system is configured to store the set of validation conditions from the validation policy in a memory device of the processing system or in a memory device of the server system.

9. The transaction generation module according to any of claims to 1 to 7, wherein the validation policy is comprised within the approved transaction request, the processing system being configured to extract the validation policy from the approved transaction request.

10. A system for generating at least one blockchain transaction for broadcasting to a blockchain network for inclusion into a blockchain, the system comprising:
a transaction generation module according to claim 8; and
a plurality of administrator computing systems each having access to a hardware authentication device or a software authentication application for storing the corresponding administrator private key and for creating electronic signatures using the corresponding administrator private key;
wherein the administrator computing systems are configured to cooperate with one another to provide the validation policy to the transaction generation module.

11. A system for generating at least one blockchain transaction for broadcasting to a blockchain network for inclusion into a blockchain, the system comprising:
a transaction generation module according to claim 9;
a plurality of administrator computing systems each having access to a hardware authentication device or a software authentication application for storing the corresponding administrator private key and for creating electronic signatures using the corresponding administrator private key; and
a plurality of approver computing systems each having access to a hardware authentication device or a software authentication application for storing the corresponding approver private key and for creating electronic signatures using the corresponding approver private key;
wherein the administrator computing systems are configured to cooperate with one another to provide the validation policy to at least one of the approver computing systems and the approver computing systems are configured to cooperate with one another to provide the approved transaction requests to the transaction generation module.

12. A blockchain network comprising a blockchain node comprising the system according to either of claims 10 or 11.

13. A computer-implemented method for generating a blockchain transaction for broadcasting to a blockchain network for inclusion into a blockchain, the method comprising:
authenticating, using a processing system, a received validation policy, the validation policy comprising at least one set of validation conditions, said authentication using a plurality of administrator private keys of a corresponding plurality of cryptographically-related pairs of private and public cryptographic keys, each of the plurality of administrator private keys pertaining to a different one from a plurality of administrator computing systems;
receiving an approved transaction request, the approved transaction request being a first type of data message comprising source data and/or metadata from which the blockchain transaction may be generated;
generating, by the processing system, the blockchain transaction based on the approved transaction request if all or part of the approved transaction request fulfills at least one of the sets of validation conditions according to the validation policy;
preventing, using the processing system, said generation of the blockchain transaction unless the validation policy is positively authenticated; and
electronically signing, by the processing system, the blockchain transaction using all or part of a cryptographic key pertaining to the processing system or to the transaction generation module.

14. The computer-implemented method according to claim 13, further comprising:
determining, using the processing system, whether the plurality of administrator public keys used to authenticate the validation policy correspond to a plurality of administrator computing systems identified according to a predetermined quorum of identifiable administrator computing systems; and
further preventing, using the processing system, the generation of the blockchain transaction unless the plurality of administrator public keys used to authenticate the validation policy correspond to the plurality of administrator computing systems identified according to the predetermined quorum of identifiable administrator computing systems.

15. The computer-implemented method according to either of claims 13 or 14, wherein the approved transaction request is electronically signed by two or more approver computing systems from a plurality of approver computing systems, the method further comprising:
authenticating, by the processing system, the approved transaction request using two or more approver public keys of a corresponding plurality of cryptographically-related pairs of private and public cryptographic keys, each of the plurality of approver public keys pertaining to a different one from the plurality of approver computing systems;
determining, using the processing system, whether the plurality of approver public keys used to authenticate the approved transaction request correspond to a plurality of approver computing systems identified according to a predetermined quorum of identifiable approver computing systems; and
preventing, using the processing system, said generation of the blockchain transaction unless the authentication is positive and it has been determined that the plurality of approver public keys used to authenticate the approved transaction request correspond to the plurality of approver computing systems identified according to the predetermined quorum of identifiable approver computing systems.

16. The computer-implemented method according to any of claims 13 to 15, wherein the validation policy is received from at least one of the administrator computing systems, the set of validation conditions comprised in the validation policy being stored in a memory device to which the processing system has access.

17. The computer-implemented method according to any of claims 13 to 15, wherein the validation policy is a predetermined validation policy comprising at least one set of predetermined validation conditions, the predetermined validation policy having been previously communicated to at least one of the approver computing systems, the received validation policy being comprised within the approved transaction request.

18. One or more non-transitory computer-readable media having stored thereon computer executable instructions which, when executed by one or more computing systems, cause the computing systems to perform the method according to any of claims 13 to 17.
